Europäisches Patentamt

European Patent Office

Office européen des brevets

(19)

(11) Numéro de publication: **0 178 973**
**B1**

(12) **FASCICULE DE BREVET EUROPEEN**

(45) Date de publication du fascicule du brevet: **25.04.90**

(51) Int. Cl.⁵: **C 14 B 5/00,** G 06 K 19/06

(21) Numéro de dépôt: **85401790.2**

(22) Date de dépôt: **17.09.85**

(54) **Procédé de repérage de la position et de la forme de gabarits disposés sur un matériau en plaque ou en feuille.**

(30) Priorité: **18.09.84 FR 8414281**

(43) Date de publication de la demande:
**23.04.86 Bulletin 86/17**

(45) Mention de la délivrance du brevet:
**25.04.90 Bulletin 90/17**

(84) Etats contractants désignés:
**AT BE CH DE FR GB IT LI LU NL SE**

(56) Documents cités:
**WO-A-82/04266**
**DE-C- 924 485**
**US-A-3 758 753**
**US-A-3 959 631**
**US-A-3 985 293**
**US-A-4 085 314**

**ELECTRONIQUE APPLICATIONS, no. 21,
décembre-janvier 1981/1982, pages 115-117,
Paris, FR; R. COLLOREC et al.: "Dispositif de
lecture d'informations codées"**

(73) Titulaire: **MANUFACTURE FRANCAISE DES
CHAUSSURES ERAM S.A.R.L.**
**B.P. 10**
**F-49110 Saint Pierre Montlimart (FR)**

(73) Titulaire: **Loriot, Jean-Marc**
**15 rue Lakanal**
**F-75015 Paris (FR)**

(72) Inventeur: **Loriot, Jean-Marc**
**15 rue Lakanal**
**F-75015 Paris (FR)**

(74) Mandataire: **Pinguet, André**
**Cabinet de Proprieté Industrielle CAPRI 28 bis,
avenue Mozart**
**F-75016 Paris (FR)**

Courier Press, Leamington Spa, England.

EP 0 178 973 B1

**Description**

La présente invention concerne un procédé de repérage de la position et de reconnaissance de gabarits disposés sur un matériau en plaque ou en feuille. Elle s'applique avantageusement au travail du cuir: maroquinerie, chaussure, ganterie, vêtements, etc. Elle peut concerner d'autres matériaux présentant des caractéristiques analogues.

Le découpage, au moyen d'un outil piloté par commande numérique tel qu'un laser ou analogue, de pièces de formes données dans un matériau en plaque ou en feuille, notamment une peau d'animal, est actuellement au point. On sait aussi mettre en mémoire dans un ordinateur un plan de découpage permettant de tirer le meilleur parti de ladite plaque ou feuille. Ce plan de découpage optimal peut, dans le cas où ladite plaque ou feuille a une forme régulière, notamment lorsqu'elle est de matière synthétique, être calculé par des moyens informatiques. L'ordinateur qui a en mémoire le plan de découpage optimal peut ensuite commander le déplacement du laser selon ce plan. Un problème particulier se pose lorsque le matériau que l'on se propose de découper est du cuir. Une peau d'animal n'a pas la facilité d'emploi d'une plaque ou d'une feuille de matériaux fabriqué et homogène dont la forme est déterminée avant fabrication selon l'usage auquel elle est destinée. Une peau d'animal a une forme unique -deux peaux n'ont jamais des contours identiques-, elle peut présenter des défauts, elle a un sens, etc. Dans l'industrie de la chaussure, que l'on prend comme exemple, on tient compte de toutes ces particularités pour effectuer un plan de découpage optimal: les gabarits correspondant aux différentes parties de la chaussure, aux différentes pointures, aux différents modèles sont placées manuellement sur les peaux par des spécialistes. Le plan de découpage ainsi obtenu est donc propre à chaque peau, et l'on doit recommencer l'opération de positionnement des gabarits pour chaque peau. Il reste alors à procéder au repérage du plan de découpage, c-est-à-dire à reconnaître les gabarits et leurs positions sur la peau, afin de le mettre en mémoire dans un ordinateur. Celui-ci pourra commander le découpage, ou effectuer tout autre traitement, par exemple calcul du rendement, commandes d'autres opérations, modifications éventuelles, etc.

On a déjà proposé de définir les gabarits par des codes à barres voir notamment WO—A—8 204 266 (EP—A—0 079 900). D'une part, ce type de repérage n'est pas lisible simplement par une caméra; d'autre part, la lecture doit en être effectuée en suivant une direction assez précise. Or, les gabarits sont disposés selon des orientations aléatoires les plus diverses. La lecture et l'entregistrement des codes à barres des gabarits sont donc une opération compliquée.

L'objet de la présente invention est un procédé de reconnaissance des gabarits et de leurs positions sur un matériau en plaque ou en feuille, placé lui-même sur une table support, procédé utilisant des moyens de lecture optique et des moyens de marquage des gabarits lisibles par lesdits moyens de lecture optique, caractérisé en ce que les moyens de marquage portés par les gabarits sont consitutés par au moins une figure géométrique ayant une surface finie. Cette figure comporter un point remarquable, c'est-à-dire au moins une ligne caractéristique. Cette figure géométrique ou cet ensemble de figures géométriques peut être, par exemple, un triangle ou un ensemble de cercles de rayons différents et de centres alignés ou non.

Selon une caractéristique du procédé de l'invention, la lecture des gabarits est effectuée soit par une caméra matricielle vidéo, CCD ou équivalente, le champ de lecture étant fixe ou mobile par rapport à la table support, soit par une caméra linéaire, le champ de lecture étant mobile par rapport à la table support. Lorsque le champ de lecture est mobile, son déplacement est obtenu soit par le déplacement ou la rotation de la caméra au-dessus de la table support, celle-ci restant fixe, soit par le déplacement de la table support sous la caméra, celle-ci restant fixe, soit par le mouvement d'un miroir mobile. Le mouvement est avantageusement associé à un asservissement optique et/ou électronique et/ou mécanique et/ou logiciel.

Selon une autre caractéristique de l'invention, la fréquence de prise des images est avantageusement commandée par un codeur asservi au déplacement du champ de lecture, ou par un asservissement optique.

Selon encore une autre caractéristique de l'invention, les gabarits, au moins au moment de l'exploration, sont sans contraste optique avec le matériau en plaque ou en feuille sur lequel ils sont appliqués, et les moyens de marquage portés par les gabarits font un contraste optique avec lesdits gabarits. A cette fin, les gabarits peuvent être découpés dans un matériau constitué par la superposition sur une première matière éventuellement réfléchissante d'une seconde matière contrastante avec la première mais non contrastante avec le matériau en plaque ou en feuille où les gabarits sont appliqués. On découpe ensuite dans cette seconde matière, par quelque procédé que ce soit, les contours des moyens de marquage et l'on enlève ensuite les figures délimitées par ces contours. Les gabarits peuvent être aimantés, de même que la table support, afin qu'après le positionnement des gabarits sur le matériau en plaque ou en feuille, lui-même soit posé sur la table support, aucun gavarit ne puisse bouger notamment lors du déplacement de la table support quand celle-ci est mobile.

La caméra que l'on utilise, qu'elle soit linéaire ou matricielle, comporte un certain nombre d'éléments photosensibles tels que des diodes disposées sur une ligne dans le premier cas, selon une matrice de n lignes, m colonnes dans le second cas. Ces caméras étant placées à une distance convenable au-dessus du plan de découpage, chaque diode lit les informations contenues sur une aire de 1 mm×1 mm par exemple, ce qui permet une précision de lecture compatible avec la précision de découpage que l'on obtient du laser.

Dans le cas où les gabarits sont positionnés manuellement par des spécialistes sur le matériau en plaque ou en feuille à découper —cas du cuir en particulier—, après que ce positionnement a été effectué, la caméra lit les moyens de marquage portés sur les gabarits et qui permettent de retrouver la forme et la position. Ces informations, ainsi que l'identification de chaque plaque ou feuille —peau d'animal en particulier—, sont mises en mémoire dans un ordinateur. On peut mettre ainsi en mémoire un certain nombre de plans de découpage associés à autant de plaques ou feuilles particulières, de matériau à découper et ne procéder au découpage lui-même qu'ultérieurement.

Lorsque le champ de lecture de la caméra est mobile et que son déplacement est continu —cas de la caméra linéaire en particulier—, on ne met en mémoire que le nombre d'images nécessaires à l'enregistrement du plan de découpage.

Pour effectuer la sélection des images à tenir en mémoire, c'est-à-dire pour régler la fréquence de prise des images, on peut utiliser un codeur asservi au mouvement du champ de lecture et commandant, par un procédé électronique, la prise d'image, ou la prise en compte d'images. En effet, suivant le type de caméra, il peut être intéressant d'avoir une fréquence de prises d'images fixe. On règle donc cette fréquence à la valeur désirée, et le codeur, ou un autre moyen de sélection, sélectionne les images à prendre en compte parmi les images prises.

On peut également réaliser un asservissement optique, la caméra lisant, outre les moyens de marquage placés sur les gabarits, des marques, telles que par exemple des bandes alternées présentant un contraste optique, disposées adéquatement sur la table support.

Pour que la caméra, comportant des diodes photosensibles, qu'elle soit linéaire ou matricielle, puisse lire les moyens de marquage portés par les gabarits et pour que ces moyens de marquage soient facilement interprétables par l'ordinateur placé en aval de la caméra, lequel a déjà en mémoire tous les gabarits possibles et n'a donc plus qu'à les identifier à partir des moyens de marquage, on pratique de la façon suivante selon la présente invention. Dans la mesure où les diodes photosensibles ne sont sensibles qu'à de forts contrastes optiques, on élimine le risque d'erreurs de lecture en confectionnant des gabarits ne présentant pas de contraste avec la plaque ou la feuille de matériau où ils sont disposés et sur lesquels les moyens de marquage se détachent nettement, compte tenu du pouvoir séparateur de la caméra. On peut à cet effet découper le gabarit dans un matériau composé de deux feuilles superposées faites l'une d'une matière réfléchissante par exemple, et l'autre d'une matière de même couleur, celle de la plaque ou de la feuille sur laquelle le gabarit sera positionné ou d'une autre couleur son différenciée par la caméra. On découpe dans cette dernière par un moyen approprié, le laser par exemple, les contours des moyens de marquage et l'on enlève ensuite les figures découpées, laissant ainsi apparaître la surface réfléchissante. Le contraste entre cette matière réfléchissante et le fond sur lequel elle se détache pourra être augmenté en plaçant des moyens d'éclairage judicieux au-dessus de la table support. A l'inverse, les marques pourraient se détacher en sombre.

Quant aux moyens de marquage eux-mêmes, ils sont constitués selon la présente invention par au moins une figure géométrique ayant une surface finie. Le choix d'une telle figure géométrique comme moyen de marquage est justifié par le fait qu'un ordinateur effectue facilement et avec une précision compatible avec celle exigée pour le découpage des calculs de surface, la mesure de la surface, ou la reconnaissance de points ou de lignes caractéristiques tels que barycentre, axes, etc., ce qui n'est pas le cas avec des points ou des traits comme par exemple un code barre. La dimension minima est fonction du pixel.

Ce moyen de marquage peut être un polygone tel qu'un triangle, une ellipse, un ensemble de cercles de diamètres différents dont les centres peuvent être alignés ou non, etc.

A titre d'exemple, lorsque le moyen de marquage est une ellipse, l'ordinateur peut en calculer la surface, le grand axe, le petit axe, les foyers, le barycentre, toutes caractéristiques permettant d'identifier un gabarit particulier, sa localisation et son orientation sur la plaque ou la feuille de matériau à découper.

Selon un autre exemple, le moyen de marquage est un triangle dont l'ordinateur calcule quelques caractéristiques choisies notamment parmi les suivantes: surface, équation de lignes remarquables telles que côtés, hauteurs, médianes, bissectrices des angles, points d'intersection de ces lignes remarquables tels que sommets des côtés, orthocentre, centre des cercles inscrits et circonscrits, angles, etc., toutes caractéristiques permettant là encore d'identifier un gabarit particulier, sa localisation et son orientation sur la plaque ou feuille de matériau à découper.

D'autres caractéristiques et avantages de la présente invention apparaîtront mieux à la lecture de la description suivante donnée à titre d'exemple non limitatif et qui fera bien comprendre comment l'invention peut être réalisée.

Sur les dessins,

—la Figure 1 représente un exemple de moyen de marquage réalisé avec différents cercles de centres alignés, et,

—la Figure 2 est une vue en plan d'une partie d'une table de travail, représentant trois gabarits munis de moyens de marquage conformes à ceux de la Figure 1.

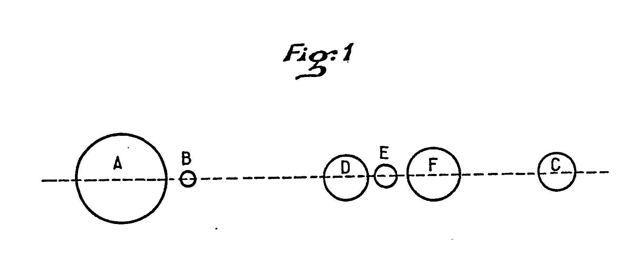

Dans l'exemple d'application représenté sur la Figure 1, le moyen de marquage est un ensemble de cercles de diamètres différents dont les centres sont alignés. L'ordinateur recherche d'abord un cercle (A) de surface donnée, identique sur tous les gabarits et indiquant la présence d'un gabarit. Le cercle (A) détecté, l'ordinateur effectue une recherche à une distance d de son barycentre pour détecter un autre cercle (B) de surface identique sur tous les gabarits et différente de celle du cercle (A). On choisit la distance d inférieure à la distance minimale à laquelle le cercle (B) pourrait se trouver du bord des gabarits de façon qu'un cercle (A) d'un gabarit ne puisse être associé avec le cercle (B) d'un autre gabarit. Les barycentres des cercles (A) et (B) définissent un axe orienté selon lequel l'ordinateur recherche un cercle (C) de surface identique sur tous les gabarits et différente de celle des cercles (A) et (B). Bien entendu, la direction (AC) pourrait ne pas coïncider avec la direction (AB). Ce cercle détecté, l'ordinateur connaît l'orientation du gabarit sur le matériau en plaque ou en feuille à découper. Il commande alors une recherche, par exemple sur ou au voisinage de l'axe déterminé par les barycentres des cercles (A), (B), (C), entre les cercles (B) et (C). Il détecte un ou plusieurs cercles (D), (E), (F) (...) dont la surface et éventuellement la situation du barycentre par rapport à ceux des cercles (A), (B), (C), lui permettent d'identifier le gabarit.

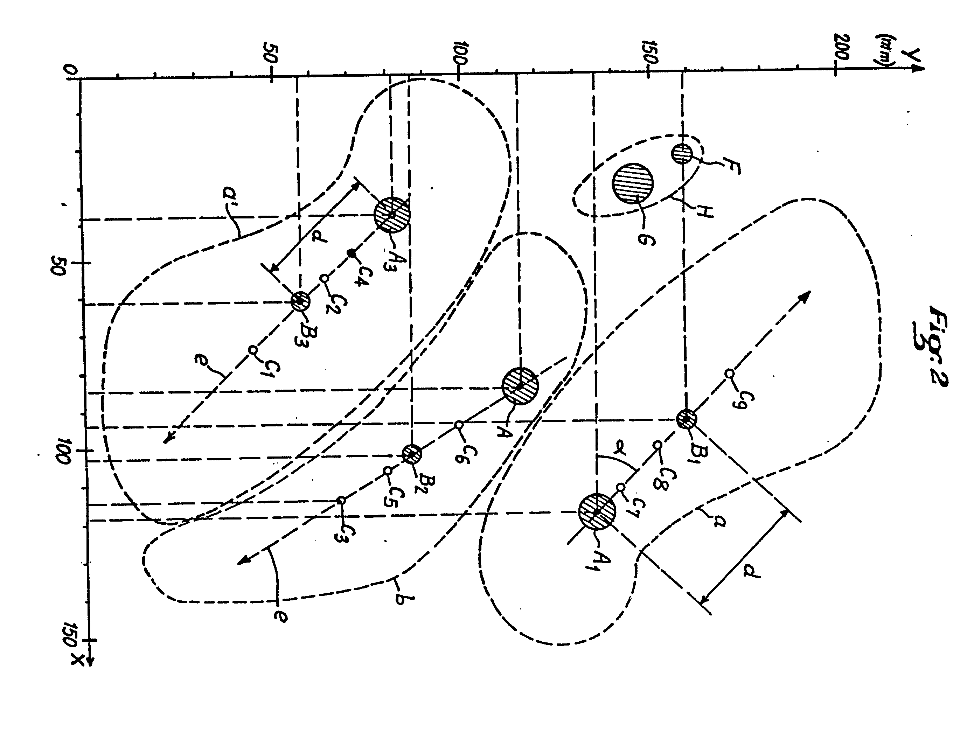

Un exemple d'application de l'invention va être décrit plus en détail en regard de la Figure 2.

Trois gabarits dont deux a, a' sont du même type alors que le troisième b est d'un autre type ont été figurés en pointillés. La position de chaque gabarit est caractérisée par la position du barycentre du cercle A, A₂, A₃, ayant dans l'exemple un diamètre de 10 mm qui est le point origine et par l'axe caractéristique e sur lequel est situé le barycentre d'un cercle B, B₂, B₃, ayant dans l'exemple un diamètre de 5 mm. Les deux cercles repères A et B ont les mêmes diamètres sur les différents gabarits et leur distance d est la même. Outre lespoints A et B et sur le même axe e, sont portés des repères constitués par des cercles C dont les positions par rapport aux points A et B donnent le code du gabarit. Sur les gabarits a et a', les positions des cercles C sont identiques.

On supposera que l'exploration est effectuée par une caméra linéaire constituée par cent cinquante diodes, la ligne des diodes étant parallèle à l'axe des X et le balayage s'effectuant selon l'axe des Y.

L'exploration donnera dans l'exemple illustré les résultats suivants:

Pour Y=45, la diode No. 75 enverra à l'ordinateur une impulsion caractéristique d'un point C qui sera mise en mémoire Cy=45, Cx=75, ce qui donne la position du point C1. Pour Y=56, les diodes 61 à 63 envoient à l'ordinateur des impulsions caractéristiques d'un point de plus grande surface; le nombre des diodes adjacentes excitées par la surface croît jusqu'à Y=58, où les cinq diodes 59 à 64 sont excitées puis ce nombre décroît ce qui permet à l'ordinateur d'identifier le point comme un point B de barycentre y=58 et x=61,5 (point B₃). Ce point B est mis en mémoire avec ses coordonnées. L'ordinateur reçoit ensuite des impulsions d'une diode unique ou au plus de deux diodes adjacentes, impulsions caractéristiques d'un point C pour Y=64 de la diode 56, ce qui identifie le point C₂; pour Y=67, de la diode 115, le point C₃; pour Y=75 de la diode 45, point C₄. Lorsque Y atteint 78, l'ordinateur reçoit plusieurs impulsions des diodes entourant la diode 38, information caractéristique d'un point A ou B. Y continuant à croître, le nombre des diodes excitées croît, mais lorsque Y=80, l'ordinateur reçoit une impulsion de la diode 108 résultant du point C₅. Pour Y=83, les dix diodes entourant la diode 38 sont excitées, ce qui est caractéristique d'un cercle A de barycentre Y=83, X=38, ce qui met en mémoire le point A₃. Y continuant à croître, le nombre des diodes excitées autour de la diode 38 décroît et pour Y=85 commence la détection du point B₂ (y=87, x=104).

L'exploration est poursuivie pour mettre en mémoire tous les points A, B et C.

Les points origine A₁, A₂, A₃ sont directement mis en mémoire. Pour déterminer l'orientation de l'axe e caractéristique de la position du gabarit, l'ordinateur identifie le point B correspondant à chacun des points A et calcule l'angle α par le sinus

$$\frac{593-Y_A}{d}$$

et le cosinus

$$\frac{X_B-X_A}{d}$$

La position de chaque gabarit est alors identifiée par la position du barycentre de son point A et par son angle α. L'identification du type du gabarit est effectuée par le calcul des positions des points C par rapport au barycentre de A sur l'axe e et l'ordinateur associe en mémoire à chaque point A et à l'angle α associé le code du gabarit dont le tracé en fonction du point origine A et de l'axe e est mis en mémoire au préalable dans l'ordinateur.

Ces informations permettrons ultérieurement la conduite du procédé de découpe, par exemple au laser, sur la même peau dont l'identité et la position sur la table de découpe par rapport aux X et Y de référence seront identifiées par le même code.

En plus de la position de pièces, l'invention peut servir à marquer des zones. Dans l'exemple du placement sur le cuir, s'il le désire, le placeur peut ne disposer que les grandes pièces; pour les petites pièces, il disposera des pastilles de surfaces données dans les intervalles laissés libres entre les grandes pièces. Le système informatique reconnaîtra ces pastilles caractéristiques et cherchera à insérer dans l'intervalle des petites pièces. Les caractéristiques de la surface de la pastille peuvent ou non indiquer la pièce à insérer et/ou leur nombre et/ou la position et/ou l'orientation.

A titre d'exemple, on a représenté sur la Figure 2 une pastille G, d'une surface déterminée. Cela pourra signifier que l'ordinateur devra explorer la surface laissée libre par les bords des pièces a, a', b, . . ., qui l'entourent, et définir lui-même la ou les pièces qu'il pourra ou devra placer.

La pastille pourra être une surface orientée, par exemple un ensemble de deux cercles G, F, ou une ellipse H, l'ordinateur devant alors placer des contours selon une orientation déterminée, qui pourra être la ligne des centres des cercles, ou une ligne faisant un angle avec cette ligne, ou un des axes de l'ellipse, etc.

La présente invention n'est pas limitée aux exemples de réalisation qui viennent d'être décrits, elle est au contraire susceptible de modifications et de variantes qui apparaîtront à l'homme de l'art. Par exemple, l'invention peut aisément être étendue à la robotique; en effet, bien souvent les pièces qui se présentent devant les robots ou les machines automatiques, se présentent dans une position aléatoire. Il est possible à un ordinateur d'évaluer leur position en disposant sur ces pièces des surfaces caractéristiques. Ces surfaces sont lues par un organe de détection, par exemple une caméra, et l'ordinateur peut en calculer des caractéristiques. Les surfaces détectées se trouvant sur les pièces à des endroits précis et connus de l'ordinateur, celui-ci peut déduire des caractéristiques de ces surfaces la position de la pièce. De plus, l'invention permet de reconnaître les pièces en codant les surfaces et de détecter la présence des pièces si celle-ci est aléatoire.

## Revendications

1. Procédé de saisie de position et de reconnaissance de gabarits sur un matériau en plaque ou en feuille, notamment une peau d'animal, placé lui-même sur une table support, utilisant des moyens de lecture optique et des moyens de marquage des gabarits lisibles par lesdits moyens de lecture optique, caractérisé en ce que les moyens de marquage portés par les gabarits sont constitués par au moins une figure géométrique ayant une surface finie comportant au moins une ligne caractéristique.

2. Procédé selon la revendication 1, caractérisé en ce que la lecture optique des gabarits est effectuée par une caméra linéaire, le champ de lecture étant mobile par rapport à la table support.

3. Procédé selon la revendication 1, caractérisé en ce que la lecture des gabarits est effectuée par une caméra matricielle vidéo, CCD ou équivalente.

4. Procédé selon la revendication 1, caractérisé en ce qu'une figure géométrique est un triangle.

5. Procédé selon la revendication 1, caractérisé en ce qu'une figure géométrique comporte plusieurs cercles, de rayons différents.

6. Procédé selon la revendication 1, caractérisé en ce que les moyens de marquage portés par les gabarits font un contraste optique avec lesdits gabarits, lesquels ne font pas de contraste avec le matériau en plaque ou en feuille sur lesquels ils sont appliqués.

7. Procédé selon l'une des revendications 1 ou 6, caractérisé en ce que les gabarits sont découpés dans une plaque d'un matériau résultant de la superposition sur une première matière éventuellement réfléchissante d'une seconde matière contrastante avec la première, mais non contrastante avec le matériau en plaque ou en feuille où les gabarits sont appliqués, seconde matière dans laquelle sont découpés, par quelque procédé que ce soit les moyens de marquage desdits gabarits.

8. Procédé selon l'une des revendications précédentes, caractérisé en ce que les gabarits et la table support sont aimantés.

9. Procédé selon la revendication 2, caractérisé en ce que la table support est fixe et la caméra linéaire est mobile et se déplace au-dessus de la table support.

10. Procédé selon la revendication 2, caractérisé en ce que la caméra linéaire est fixe et la table support est mobile et se déplace sous ladite caméra linéaire.

11. Procédé selon la revendication 2, caractérisé en ce que la table support et la caméra linéaire sont fixes toutes les deux et le déplacement du champ de lecture est obtenu à l'aide d'un miroir mobile par exemple tournant.

12. Procédé selon l'une quelconque des revendications 9, 10 ou 11, caractérisé en ce que le mouvement du champ de lecture est associé à un asservissement optique, électronique ou logiciel.

13. Procédé selon l'une des revendications 2 à 4, caractérisé en ce que la fréquence de prise des images ou de prises en compte est commandée par un codeur asservi au déplacement du champ de lecture.

14. Procédé selon l'une des revendications 2 à 4, caractérisé en ce que la fréquence de prise des images est commandée par un asservissement optique.

15. Procédé selon les revendications 1 à 14, caractérisé en ce que les moyens de marquage (F, G, H) indiquent des zones pour effectuer un traitement particulier, (tel que l'insertion de petites pièces).

## Patentansprüche

1. Verfahren zur Feststellung der Form und zum Erkennen von Modellen auf einem platten- oder blattartigen Material, insbesondere einer Tierhaut, die auf einem Trägertisch angeordnet wird, unter Verwendung optischer Lesemittel und von Markierungsmittel der Schablonen, die mit den genannten optischen Lesemitteln lesbar sind, dadurch gekennzeichnet, daß die von den Schablonen getragenen Markierungsmittel mindestens aus einer geometrischen Figur bestehen, die eine begrenzte Oberfläche mit mindestens einer charakteristischen Linie aufweist.

2. Verfahren nach Anspruch 1, dadurch gekennzeichnet, daß das optische Lesen der Schablonen durch eine Linearkamera erfolgt, wobei das Lesefeld in bezug auf den Trägertisch beweglich ist.

3. Verfahren nach Anspruch 1, dadurch gekennzeichnet, daß das Lesen der Schablonen durch eine Video-Matrizenkamera, CCD oder Gleichwertigem erfolgt.

4. Verfahren nach Anspruch 1, dadurch gekennzeichnet, daß eine geometrische Figur ein Dreieck bildet.

5. Verfahren nach Anspruch 1, dadurch gekennzeichnet, daß eine geometrische Figur mehrere Kreise mit verschiedenen Radien aufweist.

6. Verfahren nach Anspruch 1, dadurch gekennzeichnet, daß die von den Schablonen getragenen Markierungsmittel einen optischen Kontrast zu diesen Schablonen bilden, die ihrerseits keinen Kontrast zu dem platten- oder blattförmigen Material bilden, auf dem sie angebracht werden.

7. Verfahren nach einem beliebigen der Ansprüche 1 oder 6, dadurch gekennzeichnet, daß die Schablonen aus einer Platte eines Materials ausgeschnitten sind, das sich aus dem Aufeinanderlegen auf einen ersten gegebenenfalls reflektierenden Werkstoff eines zweiten mit dem ersten kontrastierenden Werkstoff ergibt, der aber nicht mit dem platten- oder blattförmigen Material kontrastiert, worauf die Schablonen angebracht sind, wobei die Markierungsmittel der genannten Schablonen aus dem zweiten Werkstoff nach einem beliebigen Verfahren ausgeschnitten werden.

8. Verfahren nach einem beliebigen der vorstehenden Ansprüche, dadurch gekennzeichnet, daß die Schablonen und der Trägertische magnetisiert sind.

9. Verfahren nach Anspruch 2, dadurch gekennzeichnet, daß der Trägertisch feststeht und daß die Linearkamera beweglich ist und sich über den Trägertisch bewegt.

10. Verfahren nach Anspruch 2, dadurch gekennzeichnet, daß die Linearkamera feststeht und der Trägertisch beweglich ist und sich unter der genannten Linearkamera bewegt.

11. Verfahren nach Anspruch 2, dadurch gekennzeichnet, daß der Trägertisch und die Linearkamera beide feststehen und die Verschiebung des Lesefeldes mit Hilfe eines beweglichen Spiegels, der sich beispielweise dreht, erfolgt.

12. Verfahren nach einem beliebigen der Ansprüche 9, 10 oder 11, dadurch gekennzeichnet, daß die Bewegung des Lesefeldes mit einer optischen, elektronischen oder einer Software-Steuerung verbunden ist.

13. Verfahren nach einem beliebigen der Ansprüche 2 bis 4, dadurch gekennzeichnet, daß die Häufigkeit der Durchführung von Aufnahmen oder Feststellungen durch einen Kodierer gesteuert wird, der von der Verschiebung des Lesefeldes gesteuert wird.

14. Verfahren nach einem beliebigen der Ansprüche 2 bis 4, dadurch gekennzeichnet, daß die Häufigkeit der Durchführung von Aufnahmen durch eine optische Steuerung gesteuert wird.

15. Verfahren nach den Ansprüchen 1 bis 14, dadurch gekennzeichnet, daß die Markierungsmittel (F, G, H) Bereiche anzeigen, um eine Sonderbehandlung durchzuführen (beispielsweise das Einfügen kleiner Teile).

**Claims**

1. A method of recognizing templates and detecting their positions on sheet or plate material, e.g. hide, which hide is placed on a supporting table, the method using optical reader means and template marker means which are readable by said optical reader means, the method including the improvement whereby the marker means on a template are constituted by at least one geometrical figure having a finite area and including at least one characteristic line.

2. A method according to claim 1, wherein the templates are optically read by means of a linear camera, having a field of view which is movable relative to the supporting table.

3. A method according to claim 1, wherein the templates are read by means of a matrix video camera, such as a charged coupled device or equivalent.

4. A method according to claim 1, wherein one of the geometrical figures is a triangle.

5. A method according to claim 1, wherein one of the geometrical figures comprises a plurality of circles of different radiuses.

6. A method according to claim 1, wherein the marker means on the templates are highly optically contrasted relative to the templates, whereas the templates are not optically contrasted relative to the sheet or plate material on which they are placed.

7. A method according to one of claims 1 and 6, wherein the templates are cut out from a plate of material built up from the superposition on a first substance eventually reflecting of a second substance contrasting relative to the first, but not contrasting relative to the sheet or plate material on which the templates are placed, second substance in which said marker means of said templates are cut out by any suitable method.

8. A method according to any preceding claims, wherein the templates and the supporting table are magnetized.

9. A method according to claim 2, wherein the supporting table is fixed and the linear camera is movable and is moved over the supporting table.

10. A method according to claim 2, wherein the linear camera is fixed and the supporting table is movable and moves under the said linear camera.

11. A method according to claim 2, wherein both the linear camera and the supporting table are fixed, and wherein the field of view of the camera is moved by means of a moving mirror, e.g. a rotating mirror.

12. A method according to any one of claims 9, 10 or 11, wherein the movement of the field of view is associated to an optical, electronic or software-servocontrolled means.

13. A method according to any one of claims 2 to 4, wherein the frequency with which images are taken or with which images are taken into account is controlled by a coder which is itself servocontrolled by the movement of the field of view.

14. A method according to any one of claims 2 to 4, wherein the frequency with which images are taken is optically servocontrolled.

15. A method according to any one of Claims 1 to 14, wherein the marker means (F, G, H) are indicating zones for which special processing is to be performed, e.g. inserting small parts.

*Fig:1*

Fig. 2